# EUROPÄISCHE PATENTSCHRIFT

(11) **EP 1 058 034 B1**
(45) Veröffentlichungstag und Bekanntmachung des Hinweises auf die Patenterteilung: **08.10.2003**
(21) Anmeldenummer: 00111232.5
(22) Anmeldetag: 25.05.2000
(51) Int. Cl.: F16H 59/04

(54) **Schaltvorrichtung für Kraftfahrzeuggetriebe**
Selector device for a gearbox of a vehicle
Dispositif sélecteur pour boîte de vitesses de véhicule

(30) Priorität: 29.05.1999 DE 19924791
(43) Veröffentlichungstag der Anmeldung: 06.12.2000
(73) Patentinhaber: DEERE & COMPANY, Moline, Illinois 61265-8098 (US)
(72) Erfinder: Rückert, Dieter, 68799 Reilingen (DE); Höfle, Jörg, 64342 Seeheim-Jugenheim (DE)
(74) Vertreter: Lau-Loskill, Philipp, Dipl.-Phys.

(56) Entgegenhaltungen:
- EP-A- 0 620 385
- EP-A- 0 754 885
- WO-A-99/11951
- US-A- 4 022 078
- US-A- 4 116 086
- US-A- 5 277 077

## Beschreibung

Die Erfindung betrifft eine Schaltvorrichtung für Kraftfahrzeuggetriebe mit einem in einem Gehäuse gelagerten Wahlhebel, der sich um eine Längsachse in Längsrichtung und um eine Querachse in Querrichtung verschwenken läßt. Am Wahlhebel oder an sich mit dem Wahlhebel mitbewegenden Bauteilen einerseits und an gehäusefesten Bauteilen andererseits sind Positionsindikationselemente bzw. Sensoren derart angeordnet, daß die Sensoren bei Annäherung an Positionsindikationselemente ansprechen und der Schwenklage des Wahlhebels entsprechende Signale an eine Getriebesteuerung abgeben.

Die gattungsbildende EP-A-0 754 886 beschreibt eine Getriebeschalthebelanordnung mit einem in einem Gehäuse gelagerten Hebel, der sich innerhalb eines Führungsschlitzes, der einen Hauptschlitz und drei über Querschlitze mit dem Hauptschlitz verbundene und zu dem Hauptschlitz parallele Unterschlitze aufweist, in Längsrichtung und in Querrichtung verschwenken läßt. Zwischen einer Gehäusewandung und dem Hebel ist ein Sektorteil verschwenkbar gelagert und wird durch eine Feder in eine mittlere Position gedrängt. Durch Bewegung des Hebels innerhalb eines Querschlitzes in Richtung eines Unterschlitzes läßt sich der Hebel mit dem Sektorteil in Eingriff bringen, so daß sich beide gemeinsam in Längsrichtung verschwenken lassen, soweit dies der jeweilige Unterschlitz zuläßt. Der Hebel und das Sektorteil tragen je einen Magneten. An der Gehäusewandung sind Hallsensoren derart angeordnet, daß beim Verschwenken des Hebels innerhalb eines Unterschlitzes und bei Annäherung der Magnete an die Hallsensoren Signale erzeugt werden, die jeweils der Hebelposition entsprechen. Insbesondere kann aus den Sensorsignalen abgeleitet werden, in welchem Unterschlitz sich der Hebel befindet und welche Position er innerhalb des Unterschlitzes einnimmt. Die bekannte Anordnung der Magnete und Sensoren erlaubt jedoch nicht die Erfassung unterschiedlicher Hebellage innerhalb beliebig ausgebildeter Führungsschlitze.

Die der Erfindung zugrunde liegende Aufgabe wird darin gesehen, eine Schaltvorrichtung der eingangs genannten Art anzugeben, die eine automatische Lageerfassung des Wahlhebels in Längsund Querrichtung bei beliebigen Bewegungen des Wahlhebels in Längs- und Querrichtung erlaubt und eine Anpassung der Schaltvorrichtung auf unterschiedliche Anwendungsfälle ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist wenigstens ein an dem Gehäuse befestigbares, austauschbares Adapterelement vorgesehen, auf dem wenigstens ein Sensor, insbesondere ein Hallsensor, angeordnet ist. Es können für die jeweiligen Anwendungsfälle verschieden bestückte Adapterelemente mit unterschiedlicher Sensoranordnung verwendet werden. Die Adapterelemente lassen sich beispielsweise durch Verschrauben oder Verrasten am Gehäuse auf einfache Weise montieren und sind leicht austauschbar.

Vorzugsweise kann das Adapterelement als Leiterplatte oder Leiterplatine ausgebildet sein, die neben den Sensoren weitere elektrische Komponenten, beispielsweise zur Aufbereitung der Sensorsignale, trägt.

Durch die erfindungsgemäße Ausbildung der Schaltvorrichtung läßt sich diese in besonders vorteilhafter Weise für unterschiedliche Anwendungsfälle, beispielsweise für in unterschiedlichen Führungsschlitzen geführte Wahlhebel, verwenden, wobei allenfalls geringfügige, einfache Anpassungsmaßnahmen getroffen werden müssen. Dies erlaubt die Fertigung von unterschiedlichen Schaltvorrichtungen in relativ großen Stückzahlen und ermöglicht eine Reduzierung der Fertigungskosten und eine rationelle Lagerhaltung.

Es ist wünschenswert, daß die Bedienungsperson beim Verschwenken des Wahlhebels spürt, wenn bestimmte Hebelstellungen erreicht oder überschritten werden. Zu diesem Zweck schlägt eine bevorzugte Weiterbildung der Erfindung vor, daß wenigstens ein an dem Gehäuse und/oder an einem sich bewegenden Bauteil befestigbares, austauschbares Bauteil vorgesehen ist, welches ein Rastschema mit wenigstens einem Rastelement aufweist. Der Wahlhebel und/oder ein sich mit dem Wahlhebel mitbewegendes Bauteil trägt wenigstens ein Rastmittel, welches mit dem Rastelement eine Rastposition festlegt.

Als am Gehäuse bzw. am Schwenkteil befestigbare und austauschbare Bauteile eignen sich z. B. austauschbare Platten mit einem Rastschema, beispielsweise mit einer oder mehreren Vertiefungen, in die eine Kugel des Rastmittels eingreift. Durch die austauschbaren Längs- und Querrasten läßt sich eine universell einsetzbare Schaltvorrichtung, auch Schalteinheit genannt, realisieren.

Gemäß einer bevorzugten Weiterbildung der Erfindung sind die Positionsindikationselemente und die Sensoren im wesentlichen in zwei Ebenen angeordnet, die in etwa parallel zu den Ebenen ausgerichtet sind, welche einerseits durch die Schwenkbahn in Längsrichtung und andererseits durch die Schwenkbahn in Querrichtung aufgespannt werden. Dies ermöglicht es, die Lage des Wahlhebels sowohl in Längsrichtung als auch in Querrichtung zu erfassen. Durch eine entsprechende Anordnung von Positionsindikationselementen einerseits und von Sensoren andererseits können beliebige Positionen des Wahlhebels für eine Lageerfassung in beiden Bewegungsrichtungen ausgewählt werden.

Eine bevorzugte Ausgestaltung der Erfindung sieht vor, im Gehäuse ein um eine gehäusefeste Längsachse verschwenkbares Schwenkteil vorzusehen, welches eine zur Längsachse quer verlaufende Querachse aufweist, um die sich der Wahlhebel verschwenken läßt. Der Wahlhebel läßt sich somit gemeinsam mit dem Schwenkteil in Längsrichtung und relativ zum Schwenkteil in Querrichtung verschwenken. Er ist nach Art eines Kreuzgelenks im Gehäuse gelagert, wobei die gehäusefeste Längsachse ein inneres Kreuzgelenk und die quer verlaufende Querachse ein äußeres Kreuzgelenk darstellt.

Da sich hierbei das Schwenkteil innerhalb einer festen Schwenkbahn, die durch die Längsachse definiert wird, bewegt, bleibt sein Abstand zu einer senkrecht zur Längsachse ausgerichteten Gehäusewandung konstant. Damit kann ein konstanter Abstand zwischen der Ebene der Positionsindikationselemente und der Ebene der Sensoren eingehalten werden. Es ist hierbei von besonderem Vorteil am Schwenkteil wenigstens einen Magneten zu befestigen und im Bereich der gegenüberliegenden Gehäusewandung wenigstens einen Sensor so anzuordnen, daß beim Verschwenken des Schwenkteils der Magnet in den Detektionsbereich des Sensors eintritt. Als Sensoren eignen sich vorzugsweise Hallsensoren. Grundsätzlich ist es auch möglich, die Hallsensoren auf dem Schwenkteil und die Magnete ortsfest am Gehäuse zu befestigen, allerdings ist die Verlegung der elektrischen Leitungen für ortsfest angeordnete Hallsensoren einfacher.

Um die Drehposition des Wahlhebels in Längsrichtung kontinuierlich erfassen zu können, schlägt eine bevorzugte Weiterbildung der Erfindung vor, die Schwenkbewegung des Schwenkteils auf einen Drehgeber zu übertragen. Dies kann beispielsweise dadurch erfolgen, daß am Schwenkteil ein Zahnrad oder Zahnsegment befestigt ist, welches mit einem weiteren Zahnrad oder Zahnsegment zusammenwirkt, wobei das weitere Zahnrad oder Zahnsegment über eine Welle mit einem Drehgeber verbunden ist. Durch geeignete Bemessung der Teilkreise der Zahnräder läßt sich ein gewünschtes Übertragungsverhältnis zwischen Wahlhebel und Drehgeber einstellen.

Die Verwendung eines Drehgebers ist besonders dann von Vorteil, wenn die Schaltvorrichtung verwendet werden soll, um Steuersignale für einen Fahrzeugantrieb mit einem stufenlos verstellbaren Getriebe vorzugeben. Hierbei läßt sich beispielsweise das Übertragungsverhältnis des Getriebes analog zur Stellung des Wahlhebels 14, die durch den Drehgeber erfaßt wird, einstellen.

Vorzugsweise kann als Drehgeber ein berührungsloser Drehgeber, beispielsweise ein endloser Drehsensor mit Hallelement, Verwendung finden, wie er beispielsweise durch die Fa. AB Electronics angeboten wird.

Eine bevorzugte Ausgestaltung der Erfindung schlägt vor, daß das Schwenkteil bzw. der Wahlhebel Rastmittel trägt, welches mit gehäusefesten bzw. am Schwenkteil ausgebildeten Rastelementen zusammenwirkt, um Rastpositionen beim Verschwenken des Wahlhebels in Längsrichtung bzw. in Querrichtung zu definieren.

Als Rastmittel dient vorzugsweise ein Kugeldruckelement, deren Kugel mit einem als Nockenfläche, die beispielsweise Vertiefungen und/oder Erhebungen aufweist, ausgebildeten Rastelement zusammenwirkt. Das Kugeldruckelement enthält eine federbelastete, zurückdrückbare Kugel.

Gemäß einer weiteren bevorzugten Ausgestaltung der Erfindung ist im Gehäuse ein um eine gehäusefeste Querachse verschwenkbares Tragteil gelagert, welches über einen Mitnehmer an der Querschwenkbewegung des Wahlhebels teilnimmt. Das Tragteil trägt wenigstens ein Positionsindikationselement, insbesondere einen Magneten, welches beim Verschenken des Tragteils in den Detektionsbereich wenigstens eines gehäusefesten Sensors, vorzugsweise eines Hallsensors, eintritt.

Eine einfache, bevorzugte Ausbildung des Mitnehmers ist durch eine gabelförmige Aufnahme am Tragteil gegeben, die einen in der Aufnahme verschiebbaren, in Richtung der Querachse ausgerichteten Bügel des Wahlhebels aufnimmt. Dies erlaubt ein Verschwenken des Wahlhebels in Längsrichtung, bei dem der Bügel innerhalb der gabelförmigen Aufnahme in Längsrichtung verschoben wird, ohne daß das Tragteil verschwenkt wird. Wenn jedoch der Wahlhebel in Querrichtung bewegt wird, überträgt der Bügel die Schwenkbewegung auf das Tragteil, und verschwenkt dieses mit dem Wahlhebel.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht, einer erfindungsgemäßen Schaltvorrichtung, bei der Gehäuse, Führungskulisse und Schaltknauf getrennt dargestellt sind,
- Fig. 2: die Explosionszeichnung einer Schaltvorrichtung gemäß Fig. 1 und
- Fig. 3: eine Leiterplatte mit Hallsensoren für die Detektierung in Längsrichtung und
- Fig. 4: eine Leiterplatte mit Hallsensoren für die Detektierung in Querrichtung.

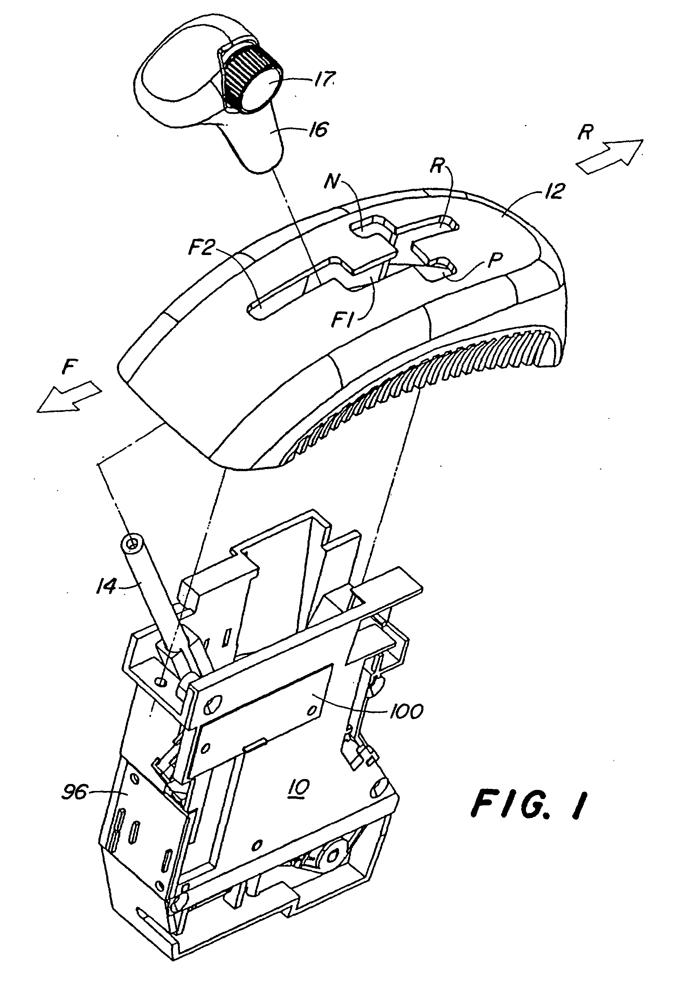

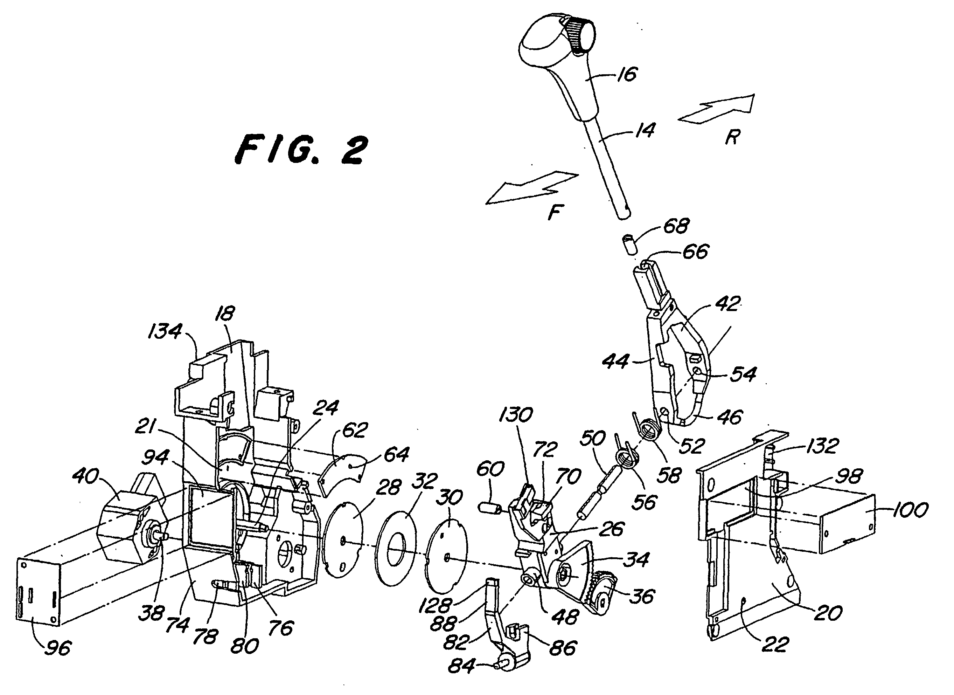

Die in den Figuren 1 und 2 dargestellte Schaltvorrichtung enthält im wesentlichen ein Gehäuse 10, eine das Gehäuse 10 oben abdeckende Führungskulisse 12 und einen Wahlhebel 14, an dessen freiem, durch die Führungskulisse 12 nach oben aus dem Gehäuse 10 ragendem Ende ein von einer Bedienungsperson betätigbarer Schaltknauf 16 mit hier nicht näher erläutertem Einstellknopf 17 befestigt ist. Das Gehäuse 10 enthält ein Basisgehäuse 18 und eine seitliche Abdeckplatte 20, die mit dem Basisgehäuse 18 verschraubbar ist und durch die das Basisgehäuse 18 seitlich verschließbar ist.

An einer Stirnwandung 21 des Basisgehäuses 18 und an einer Lagerstelle 22 der der Stirnwandung 21 gegenüberliegenden Abdeckplatte 20 stützt sich eine Längsachse 24 ab, auf der ein Schwenkteil 26, auch Quadrant genannt, verschwenkbar gelagert ist. Auf der Längsachse 24 sind zwischen dem Schwenkteil 26 und der Stirnwandung 21 des Basisgehäuses 18 zwei Stahlscheiben 28, 30 und eine dazwischen liegende Reibscheibe 32 angeordnet, die eine Reibkupplung darstellen und die Schwenkbewegung des Schwenkteils 26 in Längsrichtung hemmen, so daß das Schwenkteil 26, und mit ihm der Wahlhebel 14, in seiner jeweiligen Längslage verharrt, sofern keine Verstellkraft aufgewendet wird.

An dem Schwenkteil 26 ist ein erstes Zahnsegment 34 befestigt, dessen Drehachse mit der Längsachse 24 zusammenfällt. Das erste Zahnsegment 34 kämmt mit einem zweiten Zahnsegment 36, das drehfest mit der Eingangswelle 38 eines Drehgebers 40 verbunden ist. Hierdurch wird die Schwenkbewegung des Schwenkteils 26 auf den Drehgeber 40 übertragen. Der Drehgeber 40 ist ein Hallsensoren enthaltender berührungsloser sich endlos drehender Drehgeber. Die Drehgebersignale entsprechen der jeweiligen Schwenklage des Wahlhebels 14 in Längsrichtung und werden an eine nicht näher dargestellte Getriebesteuerung übermittelt.

Eine nicht näher dargestellte Ausnehmung des Schwenkteils 26 nimmt ein Rastmittel auf, das aus einem Kugeldruckelement 60 besteht und parallel zur Längsachse 24 ausgerichtet ist. Das Kugeldruckelement 60 enthält im wesentlichen eine Hülse, innerhalb der eine Druckfeder angeordnet ist, welche eine Kugel axial nach außen drückt. Der Kugel gegenüberliegend ist an der Stirnwandung 21 des Basisgehäuses 18 eine austauschbare Rastplatte 62 befestigt, die im vorliegenden Ausführungsbeispiel lediglich eine Rastbohrung 64 aufweist. Bei einer bestimmten Schwenklage des Wahlhebels 14 in Längsrichtung (und mit ihm des Schwenkteils 26) greift die Kugel des Kugeldruckelements 60 in die Rastbohrung 64 ein und bildet eine Rastposition, die von der Bedienungsperson beim Schwenken des Wahlhebels 14 spürbar ist. Durch Verwendung unterschiedlicher Rastplatten 62 mit unterschiedlicher Anzahl und Lage der Rastbohrungen, lassen sich ohne nennenswerten Aufwand unterschiedliche Rastpositionen für die Längsschwenkbewegung des Wahlhebels 14 festlegen.

Der untere, dem Schaltknauf 16 abgewandte Bereich des Wahlhebels 14 geht in zwei zueinander beabstandete Schenkel 42, 44 über, deren untere, freie Enden durch einen Bügel 46, oder eine Gabel miteinander verbunden sind. Bei montierter Schaltvorrichtung befindet sich das Schwenkteil 26 im Bereich zwischen den beiden Schenkeln 42, 44. Eine Querbohrung 48 des Schwenkteils 26 nimmt eine Querachse 50 auf, deren beide Enden in Bohrungen 52, 54 der beiden Bügel 42, 44 eingreifen, so daß der Wahlhebel 14 sich am Schwenkteil 26 abstützt und gegenüber dem Schwenkteil 26 in Querrichtung verschwenkbar ist. Des weiteren sind zwei Schraubenfedern 56, 58 vorgesehen, die das Schwenkteil 26 bezüglich Fig. 2 nach links, das heißt in seine Parkstellung, drängen.

In eine axiale Bohrung 66 des Wahlhebels 14 ist ein Rastmittel in Form eines Kugeldruckelements 68 eingesetzt, welches ähnlich wie das bereits beschriebene Kugeldruckelement 60 ausgebildet ist. Die Kugel des Kugeldruckelements 66 ragt in den Raum zwischen den beiden Schenkeln 42, 44 und wirkt mit einer Rastfläche 70 des Schwenkteils 26 zusammen. Über die Rastfläche 70 erstreckt sich eine parallel zur Querachse 50 ausgerichtete, als Linie dargestellte, nach oben stehende Rastnase 72. Die Rastnase 72 bildet für das Kugeldruckelement 66 ein überwindbares Hindernis, durch welches die Bedienungsperson beim Verschwenken des Wahlhebels 14 in Querrichtung spürt, wenn eine bestimmte Hebelposition durchfahren wird. Dies erleichtert die Bedienung des Wahlhebels 14. Die Rastfläche 70 ist an einem an dem Schwenkteil 26 befestigten Austauschbauteil ausgebildet. Durch Verwendung unterschiedlicher Austauschteile mit unterschiedlich ausgebildeten quer verlaufenden Rastnasen, Erhebungen, Höckern, Rampen oder Vertiefungen, lassen sich auf einfache Weise unterschiedliche ertastbare Hindernisse einstellen. Damit können ohne besonderen Aufwand Anpassungen an gewünschte Anforderungen vorgenommen werden, ohne daß eine grundsätzliche Abänderung der Schalteinheit erforderlich ist.

In einer Seitenwandung 74 und in einer Zwischenwandung 76 des Basisgehäuses 18 sind Lagerstellen 78, 80 ausgebildet, in denen ein Tragteil 82 mit seiner gehäusefesten Drehachse 84 schwenkbar gelagert ist. Das Tragteil 82 weist eine nach oben offene, sich quer erstreckende gabelförmige Aufnahme 86 auf, die den Bügel 46 des Wahlhebels 14 aufnimmt. Beim Verschwenken des Wahlhebels 14 in Querrichtung um die Querachse 50 wird die Schwenkbewegung über den Bügel 46 und die Aufnahme 86 auf das Tragteil 82 übertragen, so daß dieses um die gehäusefeste Querachse 84 verschwenkt wird. Beim Verschwenken des Wahlhebels 14 in Längsrichtung um die Längsachse 24 gleitet der Bügel 46 in seiner Längsrichtung innerhalb der Aufnahme 86 ohne das Tragteil 82 zu verschwenken.

Die in Fig. 1 dargestellte Führungskulisse 12 enthält einen Schlitz, in dem der Wahlhebel 14 geführt ist. Der Schlitz enthält eine quer verlaufende Neutralgasse, die eine Neutralstellung N mit einer Parkstellung P verbindet. Von der Neutralgasse zweigt eine in Längsrichtung verlaufende erste Vorwärtsgasse F1 und zu dieser versetzt in die entgegengesetzte Richtung eine in Längsrichtung verlaufende Rückwärtsgasse R ab. Die erste Vorwärtsgasse F1 mündet in eine hierzu versetzte ebenfalls in Längsrichtung verlaufende zweite Vorwärtsgasse F2. Beim Bewegen des Wahlhebels 14 innerhalb der Vorwärtsgassen F1 und F2 und der Rückwärtsgasse R wird der Drehgeber 40 verdreht und gibt entsprechend Signale an eine Getriebesteuerung ab, um eine der Wahlhebelstellung entsprechende Fahrzeuggeschwindigkeit einzustellen.

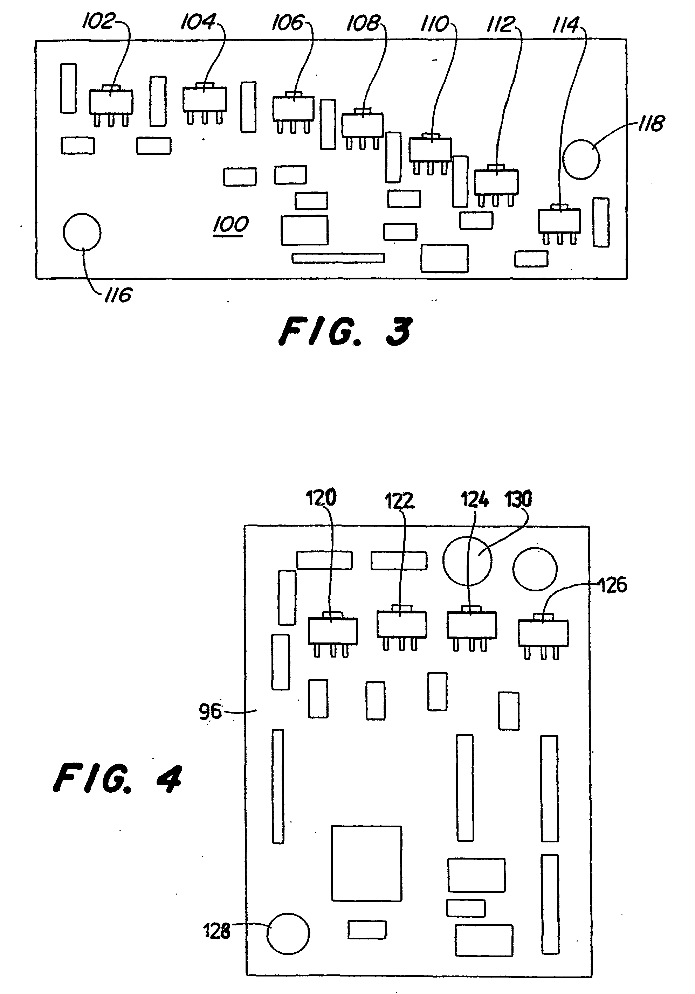

Eine Öffnung 94 in der Seitenwandung 74 des Basisgehäuses 18 ist durch eine erste Leiterplatine 96 verschließbar. Eine Öffnung 98 in der Abdeckplatte 20 ist durch eine zweite Leiterplatine 100 verschließbar. Die Figuren 3 und 4 zeigen die beiden Leiterplatinen 96, 100 von der Gehäuseinnenseite aus. Wie aus Fig. 3 ersichtlich, sind auf der zweiten Leiterplatine 100 sieben Hallsensoren 102, 104, 106, 108, 110, 112, 114 bogenförmig angeordnet. Zwei Befestigungsbohrungen 116, 118 dienen der Montage an der Abdeckplatte 20. Gemäß Fig. 4 sind auf der ersten Leiterplatine 96 vier Hallsensoren 120, 122, 124, 126 bogenförmig angeordnet. Auch hier sind zwei Befestigungsbohrungen 128, 130 vorgesehen, die der Befestigung an der Seitenwandung 74 dienen. Beide Leiterplatinen 96, 100 sind mit weiteren elektrischen Bauelementen bestückt, die als Rechtecke in den Figuren 3 und 4 angedeutet, aber nicht näher bezeichnet sind. Es handelt sich hierbei um Widerstände, Spannungsregulatoren, integrierte Bausteine und dergleichen, die der Signalaufbereitung der Hallsensoren 102 bis 114 und 120 bis 126 dienen.

Das Tragteil 82 trägt einen sich im wesentlichen nach oben erstreckenden Ausleger 88, an dessen oberen Ende ein Permanentmagnet 128 befestigt ist. Beim Verschwenken des Tragteils 82 bewegt sich der Permanentmagnet 128 parallel zur Oberfläche der ersten Leiterplatine 96 entlang eines Bogens, auf dem die Hallsensoren 120, 122, 124, 126 der ersten Leiterplatine 96 angeordnet sind. Beim Verschwenken des Wahlhebels 14 in Querrichtung wird das Magnetfeld des Permanentmagneten 128 nacheinander jeweils von einem der Hallsensoren 120, 122, 124, 126 erfaßt, so daß diese entsprechend der Lage des Wahlhebels 14 Steuersignale an eine Getriebesteuerung abgeben. Nimmt der Wahlhebel 14 die Neutralstellung N ein, spricht der Hallsensor 120 auf das Magnetfeld des Permanentmagneten 128 an, mit Erreichen der Rückwärtsgasse R spricht der Hallsensor 122 an, mit Erreichen der ersten Vorwärtsgasse F1 spricht der Hallsensor 124 an und wenn der Wahlhebel sich in Parkstellung P befindet, spricht der Hallsensor 126 an.

Auch das Schwenkteil 26 trägt in seinem oberen Bereich einen Permanentmagneten 130. Beim Verschwenken des Schwenkteils 26 bewegt sich der Permanentmagnet 130 parallel zur Oberfläche der zweiten Leiterplatine 100 entlang eines Bogens, auf dem die Hallsensoren 102, 104, 106, 108, 110, 112, 114 der zweiten Leiterplatine 100 angeordnet sind. Beim Verschwenken des Wahlhebels 14 in Längsrichtung wird das Magnetfeld des Permanentmagneten 130 nacheinander jeweils von einem oder mehreren der Hallsensoren 102, 104, 106, 108, 110, 112, 114 erfaßt, so daß diese entsprechend der Lage des Wahlhebels 14 Steuersignale an eine Getriebesteuerung abgeben. Aus den Steuersignalen der Hallsensoren 102, 104, 106, 108, 110, 112, 114 ergibt sich beispielsweise, ob sich der Wahlhebel 14 in der Endlage der Rückwärtsgasse R, der Parkstellung P, der Neutralgasse, der Neutralstellung N, dem Übergangsbereich zwischen der ersten und der zweiten Vorwärtsgasse F1 und F2 oder der Endlage der zweiten Vorwärtsgasse F2 befindet.

An der Stelle 132 der Abdeckplatte 20 kann ein Mikroschalter montiert werden, dessen Auslöseelement in der Schwenkbahn des Wahlhebels 14 liegt und bei Erreichen der Parkposition P anspricht. Des weiteren kann ein Mikroschalter an der Stelle 134 des Basisgehäuses 18 montiert werden, dessen Auslöseelement ebenfalls in der Schwenkbahn des Wahlhebels 14 liegt und bei Erreichen der Neutralposition N anspricht. Die Signale der Mikroschalter werden einer nicht dargestellten Getriebesteuerung zugeführt und dort ausgewertet.

Die dargestellte Schalteinheit mit den integrierten Schaltelementen zur Vorwahl der Fahrzeuggeschwindigkeit sowie einem Betätigungsgrad für Handgas (Drehgeber 40), ist eine Baugruppe zum manuellen, stufenlosen Schalten eines stufenlosen Getriebes unter Last in landwirtschaftlichen Traktoren.

## Patentansprüche

1. Schaltvorrichtung für Kraftfahrzeuggetriebe mit einem in einem Gehäuse (10) gelagerten Wahlhebel (14), der sich um eine Längsachse (24) in Längsrichtung und um eine Querachse (50) in Querrichtung verschwenken läßt, wobei am Wahlhebel (14) oder an sich mit dem Wahlhebel (14) mitbewegenden Bauteilen (26, 82) Positionsindikationselemente (128, 130) und an gehäusefesten Bauteilen (96, 100) Sensoren (102 - 114, 120 - 126) derart angeordnet sind, daß die Sensoren (102 - 114, 120 - 126) bei Annäherung der Positionsindikationselemente (128, 130) ansprechen und der Schwenklage des Wahlhebels (14) entsprechende Signale an eine Getriebesteuerung abgeben, wobei auf einem an dem Gehäuse (10) befestigbaren Adapterelement (96, 100) wenigstens ein Sensor, insbesondere ein Hallsensor (102 - 114, 120 - 126), angeordnet ist, **dadurch gekennzeichnet, daß** der Längsrichtung und der Querrichtung je wenigstens ein mit Sensoren (102 - 114, 120 - 126) bestücktes, austauschbares Adapterelement (96, 100) zugeordnet ist.

2. Schaltvorrichtung nach Anspruch 1, **dadurch gekennzeichnet, daß** das Adapterelement als Leiterplatte (96, 100) oder Leiterplatine ausgebildet ist, die neben den Sensoren (102 - 114, 120 - 126) weitere elektrische Komponenten, die beispielsweise der Aufbereitung der Sensorsignale dienen, trägt.

3. Schaltvorrichtung nach Anspruch 1 oder 2, **dadurch gekennzeichnet, daß** wenigstens ein an dem Gehäuse (10) und/oder an einem sich bewegenden Bauteil (26) befestigbares, austauschbares Bauteil (62, 70) vorgesehen ist, welches ein Rastschema mit wenigstens einem Rastelement (64) aufweist, und daß der Wahlhebel (14) und/oder ein sich mit dem Wahlhebel (14) mitbewegendes Bauteil (26) wenigstens ein Rastmittel (60) trägt, welches mit dem Rastelement (64) eine Rastposition festlegt.

4. Schaltvorrichtung nach einem der Ansprüche 1 bis 3, **dadurch gekennzeichnet, daß** die Positionsindikationselemente (128, 130) und die Sensoren (102 - 114, 120 - 126) im wesentlichen in Ebenen angeordnet sind, die in etwa parallel zu den Ebenen ausgerichtet sind, welche einerseits durch die Schwenkbahn in Längsrichtung und andererseits durch die Schwenkbahn in Querrichtung aufgespannt werden.

5. Schaltvorrichtung nach einem der Ansprüche 1 bis 4, **dadurch gekennzeichnet, daß** im Gehäuse (10) ein um eine gehäusefeste Längsachse (24) verschwenkbares Schwenkteil (26) gelagert ist, welches eine zur Längsachse (24) quer verlaufende Querachse (50) aufweist, um die der Wahlhebel (14) verschwenkbar ist.

6. Schaltvorrichtung nach Anspruch 5, **dadurch gekennzeichnet, daß** am Schwenkteil (26) wenigstens ein Positionsindikationselement, vorzugsweise ein Magnet (130), befestigbar ist, der beim Verschwenken des Schwenkteils (26) in den Detektionsbereich wenigstens eines gehäusefest angeordneten Sensors, vorzugsweise eines Hallsensors (102 - 114, 120 - 126), eintritt.

7. Schaltvorrichtung nach Anspruch 5 oder 6, **dadurch gekennzeichnet, daß** die Schwenkbewegung des Schwenkteils (26) auf einen Drehgeber (40) übertragen wird.

8. Schaltvorrichtung nach Anspruch 7, **dadurch gekennzeichnet, daß** der Drehgeber ein berührungsloser Drehgeber (40), insbesondere mit Hallsensor, ist.

9. Schaltvorrichtung nach einem der Ansprüche 5 bis 8, **dadurch gekennzeichnet, daß** das Schwenkteil (26) wenigstens ein Rastmittel (60) trägt, welches mit wenigstens einem gehäusefesten Rastelement (64) zusammenwirkt, um Rastpositionen beim Verschwenken des Wahlhebels (14) in Längsrichtung zu definieren.

10. Schaltvorrichtung nach einem der Ansprüche 5 bis 9, **dadurch gekennzeichnet, daß** der Wahlhebel (14) wenigstens ein Rastmittel (68) trägt, welches mit wenigstens einem am Schwenkteil (26) ausgebildeten Rastelement (72) zusammenwirkt, um Rastpositionen beim Verschwenken des Wahlhebels (14) in Querrichtung zu definieren.

11. Schaltvorrichtung nach Anspruch 9 oder 10, **dadurch gekennzeichnet, daß** das wenigstens eine gehäusefeste Rastelement (64) und/oder das wenigstens eine am Schwenkteil (26) ausgebildete Rastelement (72) auf am Gehäuse (10) bzw. am Schwenkteil (26) befestigbaren, austauschbaren Bauteilen (62, 70) ausgebildet sind.

12. Schaltvorrichtung nach einem der Ansprüche 9 bis 11, **dadurch gekennzeichnet, daß** als Rastmittel ein Kugeldruckelement (60, 68) dient, das mit einem als Nockenfläche (70), beispielsweise mit wenigstens einer Vertiefung (64) oder Erhebung (72), ausgebildeten Rastelement zusammenwirkt.

13. Schaltvorrichtung nach einem der Ansprüche 1 bis 12, **dadurch gekennzeichnet, daß** im Gehäuse (10) ein um eine gehäusefeste Querachse (84) verschwenkbares Tragteil (82) gelagert ist, welches über einen Mitnehmer (86) an der Querschwenkbewegung des Wahlhebels (14) teilnimmt und wenigstens ein Positionsindikationselement, vorzugsweise einen Magneten (128), trägt, das beim Verschwenken des Tragteils (82) in den Detektionsbereich wenigstens eines gehäusefesten Sensors, vorzugsweise eines Hallsensors (120 - 126), eintritt.

14. Schaltvorrichtung nach Anspruch 13, **dadurch gekennzeichnet, daß** das Tragteil (82) eine gabelförmige Aufnahme (86) aufweist, die einen in der Aufnahme (86) verschiebbaren, in Richtung der Querachse (50) ausgerichteten Bügel (46) des Wahlhebels (14) aufnimmt.

## Claims

1. A shift device for a motor vehicle gearbox, with a selector lever (14) which is mounted in a housing, (10) and can turn in the longitudinal direction about a longitudinal axis (24) and in the transverse direction about a transverse axis (50), wherein position indicating elements (128, 130) are arranged on the selector lever (14) or on components (26, 82) which move together with the selector lever (14) and sensors (102 - 114, 120 - 126) are so arranged on components (96, 100) fixed on the housing (10) that the sensors (102 - 114, 120 - 126) respond on the approach of the position indicating elements (128, 130) and issue signals corresponding to the pivoted position of the selector lever (14) to a gearbox controller, wherein at least one sensor, in particular a Hall sensor (102 - 114, 120 - 126), is arranged on an adapter element (96, 100) which can be fixed to the housing (10), **characterized in that** at least one interchangeable adapter element (96, 100) fitted with sensors (102 - 114, 120 - 126) is associated with each of the longitudinal direction and the transverse direction.

2. A shift device according to claim 1, **characterized in that** the adapter element is in the form of a circuit board (96, 100) or printed circuit board which, as well as the sensors (102 - 114, 120 - 126), carries further electrical components which serve for processing the sensor signals for example.

3. A shift device according to claim 1 or 2, **characterized in that** at least one interchangeable component (62, 70) which can be fixed on the housing (10) and/or on a moving component (26) is provided and has detent function with at least one detent element (64), and **in that** the selector lever (14) and/or a component moving (26) together with the selector lever (14) carries at least one detent means (60) which determines a detent position with the detent element (64).

4. A shift device according to any of claims 1 to 3, **characterized in that** the position indicating elements (128, 130) and the sensors (102 - 114, 120 - 126) are arranged essentially in planes which are aligned approximately parallel to the planes which are spanned on the one hand by the pivotal path in the longitudinal direction and on the other hand by the pivotal path in the transverse direction.

5. A shift device according to any of claims 1 to 4, **characterized in that** a pivoted part (26) which can turn about a longitudinal axis (24) fixed relative to the housing is mounted in the housing (10) and has a transverse axis (50) running transverse to the longitudinal axis (24) and about which the selector lever (14) can pivot.

6. A shift device according to claim 5, **characterized in that** at least one position indicating element, preferably a magnet (130), can be fixed on the pivoted part (26) and, on pivoting of the pivoted part (26), enters the detector range of at least one sensor fixedly arranged relative to the housing, preferably a Hall sensor (102 - 114, 120 - 126).

7. A shift device according to claim 5 or 6, **characterized in that** the pivotal movement of the pivoted part (26) is transmitted to a rotary transducer (40).

8. A shift device according to claim 7, **characterized in that** the rotary transducer is a contact-free rotary transducer (40), especially with Hall sensor.

9. A shift device according to any of claims 5 to 8, **characterized in that** the pivoted part (26) carries at least one detent means (60), which cooperates with at least one detent element (64) fixed relative to the housing, in order to define detent positions when pivoting the selector lever (14) in the longitudinal direction.

10. A shift device according to any of claims 5 to 9, **characterized in that** the selector lever (14) carries at least one detent means (68), which cooperates with at least one detent element (72) formed on the pivoted part (26), in order to define detent positions when pivoting the selector lever (14) in the transverse direction.

11. A shift device according to claim 9 or 10, **characterized in that** the at least one detent element (64) fixed relative to the housing and/or the at least one detent element (72) formed on the pivoted part (26) are formed by interchangeable components (62, 70) which can be fixed on the housing (10) and the pivoted part (26) respectively.

12. A shift device according to any of claims 9 to 11, **characterized in that** a ball pressure element (60, 68) serves as a detent means, cooperating with a detent element in the form of a cam surface (70), for example with at least one depression (64) or protuberance (72).

13. A shift device according to any of claims 1 to 12, **characterized in that** a support part (82) which can pivot about a transverse axis (84) fixed relative to the housing is mounted in the housing (10) and participates in the transverse pivotal movement of the selector lever (14) through an entraining member (86) and carries at least one position indicating element, preferably a magnet (128), which enters the detection range of at least one sensor fixed relative to the housing, preferably a Hall sensor (120 - 126) on pivoting of the support part (82).

14. A shift device according to claim 13, **characterized in that** the support part (82) has a fork-shaped recess (86), which receives a bow (46) of the selector lever (14) which can slide in the recess (86) in the direction of the transverse axis (50).

## Revendications

1. Dispositif sélecteur pour boîte de vitesses de véhicule automobile avec un levier de sélection (14) logé dans un boîtier (10), ledit levier de sélection pouvant être orienté dans le sens de la longueur selon un axe longitudinal (24) et dans le sens de la largeur selon un axe transversal (50), des éléments d'indication de position (128, 130) étant disposés sur le levier de sélection (14) ou sur des éléments (26, 82) se déplaçant avec le levier de sélection et des détecteurs (102 à 114, 120 à 126) disposés sur des éléments fixés au boîtier (96, 100), de telle manière que les détecteurs (102 à 114, 120 à 126) réagissent en cas de rapprochement des éléments d'indication de position (128, 130) et émettent des signaux correspondant à la position d'orientation du levier de sélection (14) vers la commande de la boîte de vitesses, au moins un détecteur, en particulier un détecteur à effet Hall (102 à 114, 120 à 126), étant disposé sur un élément adaptateur (96, 100) fixable sur le boîtier (10), **caractérisé en ce qu'**au moins un élément adaptateur (96, 100) interchangeable et muni de détecteurs (102 à 114, 120 à 126) est disposé dans chacun des sens longitudinaux et transversaux.

2. Dispositif sélecteur selon la revendication 1, **caractérisé en ce que** l'élément adaptateur est réalisé sous forme de plaque à circuit imprimé (96, 100) ou de plaquette à circuit imprimé, qui porte, en plus des détecteurs (102 à 114, 120 à 126), d'autres composants électriques qui servent, par exemple, au traitement des signaux du détecteur.

3. Dispositif sélecteur selon la revendication 1 ou 2, **caractérisé en ce qu'**au moins un élément interchangeable (62, 70) fixable sur le boîtier (10) et/ou sur une pièce se déplaçant (26) est prévu, ledit élément interchangeable présentant un schéma d'arrêt avec au moins un élément d'arrêt (64), et que le levier de sélection (14) et/ou un élément (26) se déplaçant avec le levier de sélection (14) porte au moins un moyen d'arrêt (60), ledit moyen d'arrêt déterminant une position d'arrêt avec l'élément d'arrêt (64).

4. Dispositif sélecteur selon l'une des revendications 1 à 3, **caractérisé en ce que** les éléments d'indication de position (128, 130) et les détecteurs (102 à 114, 120 à 126) sont disposés, pour l'essentiel, en niveaux qui sont alignés à peu près parallèlement aux niveaux, qui sont fixés d'une part par la glissière d'orientation dans le sens longitudinal et d'autre part par la glissière d'orientation dans le sens transversal.

5. Dispositif sélecteur selon l'une des revendications 1 à 4, **caractérisé en ce qu'**une pièce pivotante (26) orientable autour d'un axe longitudinal (24) fixé au boîtier est logé dans le boîtier (10), ladite pièce pivotante présentant un axe transversal (50) passant en travers de l'axe longitudinal (24), le levier de sélection (14) étant orientable autour dudit axe transversal.

6. Dispositif sélecteur selon la revendication 5, **caractérisé en ce qu'**au moins un élément d'indication de position, de préférence un aimant (130), est fixable sur la pièce pivotante (26), ledit élément d'indication de position entrant, en cas de basculement de la pièce pivotante (26), dans la zone de détection d'au moins un détecteur à effet Hall (102 à 114, 120 à 126).

7. Dispositif sélecteur selon la revendication 5 ou 6, **caractérisé en ce que** le mouvement pivotant de la pièce pivotante (26) est transmis à un encodeur (40).

8. Dispositif sélecteur selon la revendication 7, **caractérisé en ce que** l'encodeur est un encodeur sans contact (40), en particulier avec détecteur à effet Hall.

9. Dispositif sélecteur selon l'une des revendications 5 à 8, **caractérisé en ce que** la pièce pivotante (26) porte au moins un moyen d'arrêt (60), ledit moyen d'arrêt coopérant avec au moins un élément d'arrêt (64) fixé au boîtier afin de définir les positions d'arrêt en cas de pivotement du levier de sélection (14) dans le sens longitudinal.

10. Dispositif sélecteur selon l'une des revendications 5 à 9, **caractérisé en ce que** le levier de sélection (14) porte au moins un moyen d'arrêt (68), ledit moyen d'arrêt coopérant avec au moins un élément d'arrêt (72) formé sur la pièce pivotante (26) afin de définir les positions d'arrêt en cas de pivotement du levier de sélection (14) dans le sens transversal.

11. Dispositif sélecteur selon la revendication 9 ou 10, **caractérisé en ce qu'**au moins un des éléments d'arrêt (64) fixés au boîtier et/ou au moins un des éléments d'arrêt (72) formés sur la pièce pivotante (26) sont formés sur des éléments interchangeables fixables respectivement au boîtier (10) ou à la pièce pivotante (26).

12. Dispositif sélecteur selon l'une des revendications 9 à 11, **caractérisé en ce qu'**un élément de butée à billes (60, 68) est utilisé comme moyen d'arrêt, ledit élément de butée à billes coopérant avec un élément d'arrêt formé sous forme de surface à cames (70), par exemple avec au moins une partie creuse (64) ou une partie saillante (72).

13. Dispositif sélecteur selon l'une des revendications 1 à 12, **caractérisé en ce qu'**un élément porteur (82) orientable autour d'un axe transversal (84) fixé au boîtier est logé dans le boîtier (10), ledit élément porteur participant au mouvement de pivotement transversal du levier de sélection (14) via un entraîneur (86) et portant au moins un élément d'indication de position, de préférence un aimant (128), ledit élément d'indication de position entrant, en cas de pivotement de l'élément porteur (82), dans la zone de détection d'au moins un détecteur fixé au boîtier, de préférence d'un détecteur à effet Hall (120 à 126).

14. Dispositif sélecteur selon la revendication 13, **caractérisé en ce que** l'élément porteur (82) présente un logement (86) recourbé qui reçoit une bride (46) orientée dans le sens de l'axe transversal (50) et coulissant dans le logement (86).
